# EUROPEAN PATENT APPLICATION

(11) **EP 3 159 555 A1**
(43) Date of publication of application: **26.04.2017**
(21) Application number: 15425086.4
(22) Date of filing: 22.10.2015
(51) Int. Cl.: F16B 19/02

(54) **DEVICE FOR HANGING AN EXPANSION VESSEL AND HANGABLE EXPANSION VESSEL**

(71) Applicant: Zilio Industries S.r.l., 36050 Friola di Pozzoleone (VI) (IT)
(72) Inventor: Zilio, Simone, 36050 Friola DI Pozzoleone (VI) (IT)
(74) Representative: Santi, Filippo

(57) **Abstract**

Device (10, 20) for hanging an expansion vessel (100) comprising:
- a female connector (11) provided with a first end (11a) fixable to the body (101) of an expansion vessel (100);
- a male connector (12) having a first end (12a) fixable to a support suitable to support the expansion vessel (100)

The connectors (11,12) are configured to be mutually coupled by inserting said male connector (12) into said female connector (11) along a coupling direction (A) without mutual rotation about said coupling direction (A).

## Description

The present invention relates to a device for hanging an expansion vessel and to an Hangable expansion vessel.

In particular, the present invention relates to a device for hanging a flat expansion tanks, particularly suitable for boilers and heating systems.

An expansion vessel or tank is a device adapted to compensate for volume changes experienced by a liquid circulating in a hydraulic system. In particular, an expansion vessel comprises a hollow body divided into two compartments by an elastic membrane.

A traditional model of the expansion vessel comprises two complementary shells, suitable to be connected along their edge, and a membrane of polymeric material perimetrically fixed to the edges of the shells.

In this way each shell cooperates with the membrane to define one of said compartments.

A first of these compartments is intended to be in communication with a hydraulic system and the second compartment is intended to be occupied by a gas or air possibly pressurized.

The shell that delimits the second compartment is provided with a valve adapted to inject air or gas in the latter.

When the volume of hydraulic fluid increases, the membrane deforms correspondingly increasing the volume of the first compartment and reducing the volume of the second compartment.

Nowadays, there are known hangeable expansion tanks provided with a connector adapted to secure the vessel to a support which, for example can be constituted by the frame of a boiler.

A first known type of hangeable expansion vessel comprises a bracket secured to one of the shells, for example by welding, and equipped with holes to be bolted to the support.

A second hangeable expansion vessel known type comprises a water entry connection welded to one of the shells, and provided with a threaded stem on which is screwed a lock nut.

In use, the stem is inserted into a hole of a bracket to which it is locked by means of the nut.

The bushing and the valve can be in one piece.

A drawback of both these traditional hangeable expansion vessels is that breakages occur at the connection between the shell and the bracket or the bushing.

In particular, when these expansion vessels are hangied to the frame of a boiler, often the above mentioned breakages occur as a result of long transport of the boiler.

The problem underlying the present invention is to make the hangeable expansion vessel more durable and avoiding the above-mentioned breakage.

Aim of the present invention is to provide a device for hanging an expansion vessel and a hangeable expansion vessel that provides for a solution to this problem by overcoming the described disadvantages of the hangeable expansion vessel described above.

Within this aim, it is a task of the present invention to provide for a device for hanging an expansion vessel and a hangeable expansion vessel that is more resistant to vibration than the traditional hangeable expansion vessels.

Another task of the present invention is to provide a device for hanging an expansion vessel and a hangeable expansion vessel that is easy to install. Another task of the invention is to provide for a device for hanging an expansion vessel and a hangeable expansion vessel that is more simple to manufacture compared to conventional hangeable expansion vessels. This aim, these tasks and others tasks that will become apparent hereinafter are achieved by a device for hanging an expansion vessel and a hangeable expansion vessel according to the appended independent claims.

Detail features of the device for hanging an expansion vessel and of the hangeable expansion vessel according to the invention are given in the dependent claims.

Further characteristics and advantages of the invention will become apparent from the description of a non binding preferred embodiment of the device for hanging an expansion vessel and of the hangeable expansion vessel according to the invention, illustrated only by way of non-limitative example in the accompanying drawings, in which:
- Figure 1 shows a first embodiment of the device for hanging an expansion vessel according to the invention in an exploded and partially cross sectioned view;
- Figure 2 shows the device of Figure 1 as assembled;
- Figure 3 illustrates a second embodiment of the device for hanging an expansion vessel according to the invention in an exploded and partially cross-sectioned view;
- Figure 4 shows a detail enlarged and cross sectioned of an expansion tank provided with the device of figure 1 and 2.

With particular reference to the above figures, it is globally indicated with 10 a device for hanging an expansion vessel 100 which, according to the invention, has a particular peculiarity in that it comprises:
- a female connector 11 provided with a first end 11 a fixable to the body of an expansion vessel 100;
- a male connector 12 having a first end 12a fixable to a support suitable for supporting the expansion tank 100.

The male connectors 12 and female element 11 are configured so as to be coupled with each other inserting the male connector 12 into the female connector 11 along a coupling direction A without mutual rotation about the coupling direction A.

In other words, the male connector 12 is inserted into the female connector 11 along the coupling direction A without rotating relative to one another about the latter.

In practice, since the connectors 11, 12 are coupled simply by insertion, and not screwed to one another, they are movable relative to one another so that the vibrations experienced by the expansion vessel or from the support to which it is hanged are not rigidly transmitted between them, but are damped.

Preferably, the connectors 11 and 12 are configured so that, in use, i.e. when one is fixed to an expansion vessel and the other is fixed to a support adapted to support the latter, they are movable relative to one another allowing so a limited mobility of the expansion vessel relative to the support.

Advantageously, the device 10 comprises a damping member 13 interposed between the male connector 12 and the female connector 11.

The presence of the damping element improves the effect of damping vibrations transmitted between the connectors 11 and 12.

The damping member 13 is preferably made of elastomeric material.

The female connector 11 advantageously has a through hole 14 that extends in one direction, preferably rectilinear, that defines the coupling direction A.

In practice, the male connector 12 is coupled to the female connector 11 for inserting into the through hole 14, and this makes it particularly quick and easy to assemble the device 10.

The through hole 14 preferably comprises a coupling seat 15.

The male connector 12 advantageously includes a protrusion 16 complementary to the coupling seat 15 and that can be coupled with the latter to secure the male connector 12 to the female connector 11.

The damping element 13 advantageously covers the protrusion 16 so as to be interposed between the latter and the walls of the coupling seat 15. For example, the damping member 13 consists of a shirt fit on the protrusion 16.

The coupling seat 15 advantageously has an extension, along the coupling direction A, which is greater than the extension of the protrusion 16 along the same coupling direction A.

In other words, the coupling seat 15 has a width greater than that of the protrusion 16 so that, when they are coupled, the protrusion 16 is movable in the coupling seat 15.

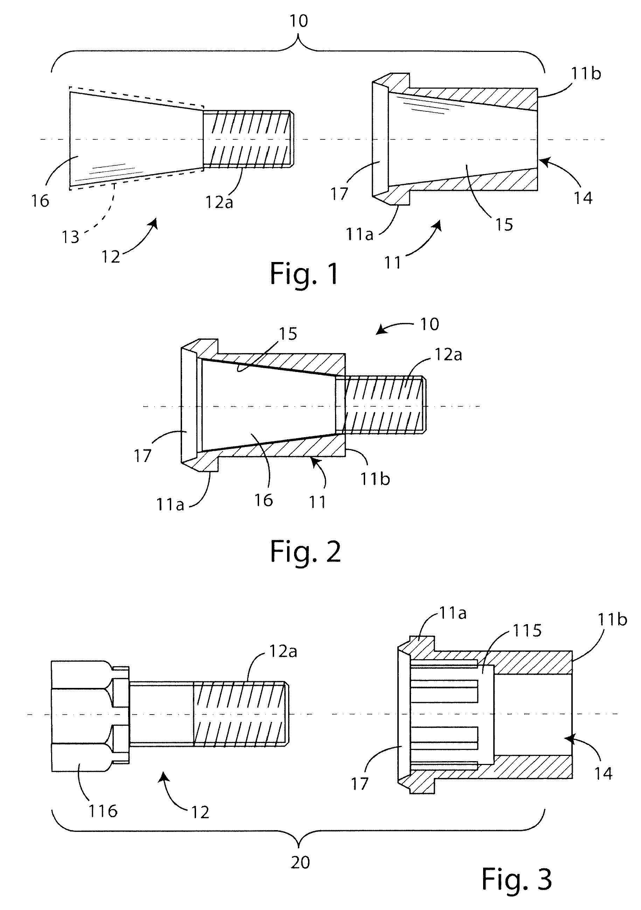

In Figures 1 and 2 it is illustrated by way of non limiting example a first embodiment of the device 10, according to the invention, which advantageously has the coupling seat 15 which is frusto-conical.

Clearly, in accordance with this first embodiment, also the protrusion 16 is frusto-conical.

The male connector 12, when it is coupled with the female connector 11 has the protrusion 16 coupled with the coupling seat 15 and the first end 12a which projects from a second end 11 b of the female connector 11, where the second end 11 b is opposite to the first end 11 a.

The second end 11 a is preferably shaped to be fixed to the body of an expansion tank 100 by means of protrusion welding, and advantageously, for this purpose, presents a welding collar 17, intended to melt during the welding process.

In figure 3 is illustrated by way of non limiting example a device for hanging an expansion vessel 20, in accordance with a second embodiment of the invention, which differs from the aforesaid first embodiment only for the shape of the protrusion and the coupling seat, that are here reffered to by the references 116 and 115 respectively.

In Figure 2 the same references of Figure 1 are used to indicate orresponding elements.

The coupling seat 115 advantageously has a polygonal section, preferably hexagonal, with respect to a plane perpendicular to the coupling direction A and, accordingly, the protrusion 116 has the same polygonal cross section, with respect to a plane perpendicular to a development direction of protrusion 116 which coincides with the coupling direction A when the protrusion 116 and the coupling seat 115 are coupled with each other.

The device 10 advantageously also comprises means for avoiding the rotation of the male connector 12 with respect to the female connector 11 when they are mutually coupled.

Such means to avoid rotation may consist in elements not-axial-symmetrical with respect to the coupling direction A of the protrusion 116 to the coupling seat 115, as exemplified in Figure 3.

Alternatively, according to the embodiment of Figures 1 and 2, the aforesaid means for avoiding rotation can be alobtained by the damping element 13 that reacts, exerting a friction force, to the rotation of the protrusion 16 inside the coupling seat 15.

Subject matter of the present invention is also an hangable expansion vessel 100 which, according to the invention, has a particular characteristic in that it comprises a body 101 and a device for hanging an expansion vessel 100 wherein the female connector 11 is fixed to the body 101 and the male connector 12 is coupled to the female connector 11 in a movable manner.

The male connector 12 is advantageously fixed to or integral with the air valve of the expansion vessel 100, which is adapted to introduce air into the body 101, as it is known and not illustrated.

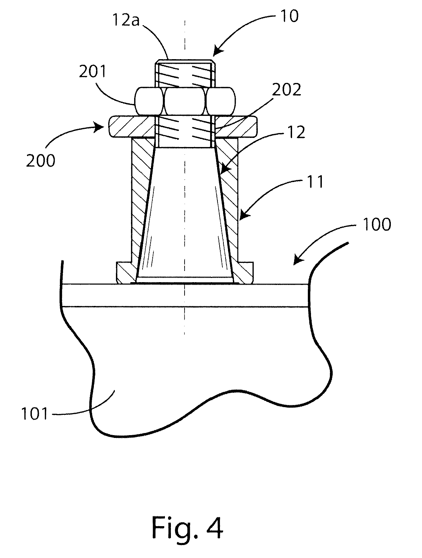

With particular reference to Figure 4, there is illustrated by way of not limitative example an enlarged detail of an expansion vessel 100 with a device 10 welded to the body 101.

The vessel 100 is hung to a support 200 by a nut 201 screwed to the first end 12a of the male connector 12 which is inserted through a hole 202 of the support 200.

The invention thus conceived is susceptible to numerous modifications and variants, all falling within the scope of the appended claims.

Furthermore all the details can be replaced by technically equivalent elements.

In practice, the materials used, as well as the contingent shapes and dimensions, can be varied according to the contingent requirements and the state of the art.

Where the construction characteristics and techniques mentioned in the appended claims are followed by signs or reference numbers, such signs or reference numbers have been used for the sole aim of increasing the intelligibility of the claims themselves and, therefore, they do not in any way constitute a limitation to the interpretation of each element which is identified, purely by way of example, by such signs or reference numbers.

## Claims

1. Device (10, 20) for hanging an expansion vessel (100) **characterized by** comprising:
- a female connector (11) provided with a first end (11 a) fixable to the body (101) of an expansion vessel (100);
- a male connector (12) having a first end (12a) fixable to a support suitable to support the expansion vessel (100);
said connectors (11,12) being configured to be mutually coupled by inserting said male connector (12) into said female connector (11) along a coupling direction (A) without mutual rotation about said coupling direction (A).

2. Device according to claim 1 **characterized in that** it comprises a damping element (13) interposed between said male connector (12) and said female connector (11).

3. Device according to one of the preceding claims **characterized in that** said female connector (11) has a through hole (14) which defines said coupling direction (A), said through hole (14) comprising a coupling seat (15, 115), said male connector (12) comprising an protrusion (16, 116) complementary to said coupling seat (15, 115) and coupleable to the latter in order to fix said male connector (12) to said female connector (11).

4. Device according to claims 2 and 3, **characterized in that** said damping element (13) covers said protrusion (16) so as to be interposed between the latter and the walls of said coupling seat (15).

5. Device according to one of claims 3 and 4 **characterized in that** said coupling seat (15) has a length along said coupling direction (A) greater than the length of said protrusion (16) along said coupling direction (A).

6. Device according to one of claims 3 to 5 **characterized in that** said coupling seat (15) is frusto-conical.

7. Device according to one of claims 3 to 5 **characterized in that** said coupling seat (15, 115) has a polygonal cross section with respect to a plane perpendicular to said coupling direction (A).

8. Device according to one of the preceding claims **characterized in that** it comprises means for avoiding rotation of said male connector (12) with respect to said female connector (11) when they are mutually coupled.

9. Hangable expansion vessel (100) **characterized in that** it comprises a body (101) and a device for hanging an expansion vessel (100) of one of the preceding claims, wherein said female connector (11) is fixed to said body (101) and said male connector (12) is movably coupled to said female connector (11).

10. Hangable expansion vessel (100) according to claim 9 **characterized in that** said male connector (12) is attached to or integral to the valve for introducing air into said body (101).
